# EUROPEAN PATENT APPLICATION

(11) **EP 4 825 532 A1**
(43) Date of publication of application: **21.10.2026**
(21) Application number: 26158960.0
(22) Date of filing: 17.02.2026
(51) Int. Cl.: B25F 5/02

(54) **CONNECTOR INTERFACE**

(30) Priority: 21.02.2025 US 202563761457 P
(71) Applicant: Black & Decker, Inc., New Britain, CT 06053 (US)
(72) Inventor: SIKORA, Michael, New Britain, 06053 (US); VALENTINE, Alastair G., New Britain, 06053 (US); CHILDERS, Justin T., New Britain, 06053 (US); COATES, Marcell E., New Britain, 06053 (US)
(74) Representative: SBD IPAdmin

(57) **Abstract**

A connector interface may include a housing including at least one opening; a circuit board within the housing, the circuit board including a plurality of electrical contacts; and a plurality of flexible conductive members on the circuit board over the plurality of electrical contacts. The plurality of flexible conductive members may extend through the at least one opening of the housing, and the plurality of flexible conductive members may be configured to come into electrical contact with the plurality of electrical contacts when pressed toward the plurality of electrical contacts.

## Description

### BACKGROUND

This disclosure relates generally to a connector interface and, in some non-limiting embodiments or aspects, to a conductive elastomer connector interface on a power tool.

Power tools may include discrete connections typically used for interfacing separate electronic devices or batteries. Discrete connections include wire-to-wire connectors, PCB housing receptacles, spring loaded metal contacts, metal leaf springs, and metal pins. Discrete connections typically require a large form factor to interface between assemblies, leading to larger tools. Discrete connections also require excessive openings in the tool housings that can lead to unintended material ingress.

### SUMMARY

According to some non-limiting embodiments or aspects, provided is a connector interface, including: a housing including at least one opening; a circuit board within the housing, wherein the circuit board includes a plurality of electrical contacts; a plurality of flexible conductive members on the circuit board over the plurality of electrical contacts, wherein the plurality of flexible conductive members extends through the at least one opening of the housing, and wherein the plurality of flexible conductive members is configured to come into electrical contact with the plurality of electrical contacts when pressed toward the plurality of electrical contacts.

In some non-limiting embodiments or aspects, the plurality of electrical contacts includes a pair of electrical contacts electrically coupled to an internal device comprising at least one of the following: a microcontroller, wireless communications circuitry, or any combination thereof.

In some non-limiting embodiments or aspects, wherein the internal device is configured to receive a supply of electric power from a DC power source electrically coupled to a corresponding pair of flexible conductive members of the plurality of flexible conductive members pressed into electrical contact with the pair of electrical contacts.

In some non-limiting embodiments or aspects, the connector interface further includes the microcontroller, wherein the microcontroller is configured to control a supply of electric power from a DC power source to a power consuming component electrically coupled to a corresponding pair of flexible conductive members of the plurality of flexible conductive members pressed into electrical contact with the pair of electrical contacts.

In some non-limiting embodiments or aspects, the microcontroller is further configured to communicate data with the power consuming component via an electrical contact of the pair of electrical contacts and a corresponding flexible conductive member of the pair of corresponding flexible conductive members pressed into electrical contact with the electrical contact.

In some non-limiting embodiments or aspects, the plurality of electrical contacts further includes at least one further electrical contact electrically coupled to the microcontroller, and wherein the microcontroller is configured to communicate data with the power consuming component via the at least one further electrical contact and a corresponding at least one further flexible conductive member of the plurality of flexible conductive members electrically coupled to the power consuming component and pressed into electrical contact with the at least one further electrical contact.

In some non-limiting embodiments or aspects, the housing includes a front side and a rear side opposite the front side, wherein the housing is configured to mate with a removable battery pack by receiving the removable battery pack within a recess in one of the front side and the rear side of the housing, wherein a side of the housing between the front side and the rear side includes a pocket, and wherein the at least one opening of the housing is located in the pocket of the housing and the plurality of flexible conductive members extends through the at least one opening of the housing and into the pocket.

In some non-limiting embodiments or aspects, the connector interface further includes a panel configured to be connected to the housing, wherein the panel includes an inner surface and an outer surface opposite the inner surface, wherein at least a portion of the panel is configured to be received within the pocket in the side of the housing, and wherein the outer surface of the at least a portion of the panel received within the pocket is in-line with an outer surface of the side of the housing proximate the pocket.

In some non-limiting embodiments or aspects, the inner surface of the panel includes a cavity.

In some non-limiting embodiments or aspects, the connector interface further includes at least one fastener configured to be received through the panel and fastened to the housing.

In some non-limiting embodiments or aspects, the pocket includes at least one component configured to form at least one snap fit connection with at least one corresponding component of the panel.

In some non-limiting embodiments or aspects, the plurality of flexible conductive members that extends through the at least one opening of the housing fluidically seals the at least one opening of the housing.

In some non-limiting embodiments or aspects, each flexible conductive member of the plurality of flexible conductive members includes a dome portion extending over a corresponding electrical contact of the plurality of electrical contacts and a base portion that extends from the dome portion and is in physical contact with an area of the circuit board surrounding the corresponding electrical contact.

In some non-limiting embodiments or aspects, the dome portion of each flexible conductive member includes a post portion that extends in a first direction through a corresponding opening of the at least one opening in the housing and a tab portion that extends in a second direction opposite the first direction toward the corresponding electrical contact of the plurality of electrical contacts.

In some non-limiting embodiments or aspects, the base portion of each flexible conductive member includes at least one leg portion configured to be connected to at least one side of the circuit board between a first face of the circuit board including the plurality of electrical contacts and a second face of the circuit board opposite the first face of the circuit board.

In some non-limiting embodiments or aspects, the connector interface further includes a frame configured to carry the circuit board and the plurality of flexible conductive members, wherein the frame includes one or more openings configured to receive one or more fasteners to be fastened to the housing with the plurality of flexible conductive members extending through the at least one opening of the housing.

In some non-limiting embodiments or aspects, the connector interface further includes: a plate including a first surface and a second surface opposite the first surface, wherein the first surface includes a first plate electrical contact and a second plate electrical contact, wherein the second surface includes a third plate electrical contact and a conductive tab that extends from the second surface of the plate, wherein the first plate electrical contact is electrically coupled to the third plate electrical contact, and wherein the second plate electrical contact is electrically coupled to the conductive tab; and a panel configured to be connected to the housing, wherein, when the panel is connected to the housing with the plate between the panel and the housing, the first surface of the plate facing the housing, and a coin cell battery between the plate and the panel, the panel presses a first terminal of the coin cell battery at a first face of the coin cell battery into electrical contact with the third plate electrical contact on the second surface of the plate and the conductive tab into electrical contact with a second terminal of the coin cell battery at a side of the coin cell battery that extends from a second face of the coin cell battery opposite the first face, and presses the first plate electrical contact into electrical contact with a first flexible conductive member of the plurality of flexible conductive members and the second plate electrical contact into electrical contact with a second flexible conductive member of the plurality of flexible conductive members to press the first flexible conductive member into electrical contact with a corresponding first electrical contact of the plurality of electrical contact and the second flexible conductive member into electrical contact with a corresponding second electrical contact of the plurality of electric contacts.

In some non-limiting embodiments or aspects, the panel includes an inner surface and an outer surface opposite the inner surface, wherein the inner surface of the panel includes a cavity configured to receive the coin cell battery and the plate.

In some non-limiting embodiments or aspects, the plate includes a circuit board, wherein the circuit board includes wireless communications circuitry, and wherein the wireless communications circuitry is configured to receive a supply of electric power from the coin cell battery.

In some non-limiting embodiments or aspects, the plurality of flexible conductive members extends a same distance from the at least one opening of the housing.

In some non-limiting embodiments or aspects, the plurality of flexible conductive members includes a first flexible conductive member and a second flexible conductive member, wherein the first flexible conductive member extends from a first opening of the at least one opening of the housing a first distance, and wherein the second flexible conductive member extends from a second opening of the at least one opening of the housing a second distance that is less than the first distance.

In some non-limiting embodiments or aspects, the connector interface further includes: a plate including a first surface and a second surface opposite the first surface, wherein the first surface includes a first electrical contact and a second electrical contact, wherein the first electrical contact is electrically coupled to the second electrical contact; and a panel configured to be connected to the housing, wherein, when the panel is connected to the housing with the plate between the panel and the housing, the first surface of the plate facing the housing, and a coin cell battery between the plate and the housing, the panel presses the first electrical contact on the first surface of the plate into electrical contact with a first flexible conductive member of the plurality of flexible conductive members to press the first flexible conductive member into electrical contact with a first electrical contact of the plurality of electrical contacts, presses a first terminal of the coin cell battery at a first face of the coin cell battery into electrical contact with the second electrical contact on the first surface of the plate, presses a second terminal of the coin cell battery at a second face of the coin cell battery opposite the first face into electrical contact with a second flexible conductive member of the plurality of flexible conductive members to press the second flexible conductive member of the plurality of flexible conductive members into electrical contact with a second electrical contact of the plurality of electrical contacts.

In some non-limiting embodiments or aspects, the panel includes an inner surface and an outer surface opposite the inner surface, wherein the inner surface of the panel includes a cavity configured to receive the plate and the coin cell battery, and wherein a portion of the plate including the first electrical contact on the first surface of the plate extends outside an area defined by a circumference of the coin cell battery when the plate and the coin cell battery are received within the cavity of the panel.

In some non-limiting embodiments or aspects, the plate includes a circuit board, wherein the circuit board includes wireless communications circuitry, and wherein the wireless communications circuitry is configured to receive a supply of electric power from the coin cell battery.

According to some non-limiting embodiments or aspects, provided is an electric power tool, including: a housing that includes a front side and a rear side, wherein the housing is configured to mate with a removable battery pack by receiving the removable battery pack within a recess in one of the front side and the rear side of the housing, wherein a side of the housing between the front side and the rear side includes a pocket, and wherein the pocket includes at least one opening; a circuit board within the housing, wherein the circuit board includes a plurality of electrical contacts; a plurality of flexible conductive members on the circuit board over the plurality of electrical contacts, wherein the plurality of flexible conductive members extends through the at least one opening, and wherein the plurality of flexible conductive members is configured to come into electrical contact with the plurality of electrical contacts when pressed toward the plurality of electrical contacts.

According to some non-limiting embodiments or aspects, provided is a connector interface, including: a housing that includes an opening; a female connector within the opening, wherein the female connector includes a plurality of electrical contacts configured to be electrically coupled to a plurality of further electrical contacts of a male connector when the male connector is received within the female connector, wherein the plurality of electrical contacts is electrically coupled to at least one of the following: a microcontroller within the housing, wireless communications circuitry within the housing, or any combination thereof; a plate including a first surface and a second surface opposite the first surface, wherein the second surface includes a plate electrical contact and a conductive tab that extends from the second surface of the plate, wherein the plate electrical contact is electrically coupled to a first further electrical contact of the male connector, and wherein the conductive tab is electrically coupled to a second further electrical contact of the male connector; and a panel configured to be connected to the housing, wherein, when the panel is connected to the housing with the plate between the panel and the housing, the first surface of the plate facing the housing, a coin cell battery between the plate and the panel, and the male connector received within the female connector, the panel presses a first terminal of the coin cell battery at a first face of the coin cell battery into electrical contact with the plate electrical contact on the second surface of the plate and the conductive tab into electrical contact with a second terminal of the coin cell battery at a side of the coin cell battery that extends from a second face of the coin cell battery opposite the first face to provide a supply of electric power from the coin cell battery to the at least one of the following: the microcontroller within the housing, the wireless communications circuitry within the housing, or any combination thereof.

According to some non-limiting embodiments or aspects, provided is a power tool including: a housing forming a motor housing portion, a handle extending from the motor housing portion, and a battery receptacle formed at a foot of the handle opposite the motor housing portion, the battery receptacle including a first sidewall and a second sidewall extending substantially parallel to a plane that extends through the handle and the motor housing portion; an electric motor disposed within the motor housing portion; a first electronic module mounted within the housing; a battery terminal block formed in the battery receptacle for making electric contact with a battery pack removably received in the battery receptacle; a recess formed into the first sidewall of the battery receptacle along a lateral direction that is substantially perpendicular to the plane; a second electronic module laterally mounted laterally into the recess; a cover that covers the second electronic module within the recess; and at least one conductive connector disposed through the first sidewall along the lateral direction in contact with the second electronic module to couple the first electronic module to the second electronic module.

In some non-limiting embodiments or aspects, the first electronic module comprises a wireless communication module and an antenna, and the second electronic module comprises a battery unit.

In some non-limiting embodiments or aspects, the second electronic module further includes a circuit board mounted between the battery unit and the first sidewall, wherein the circuit board is electrically connected to two electrodes of the battery unit, and the at least one conductive connector is in contact with the circuit board.

In some non-limiting embodiments or aspects, the second electronic module further includes a circuit board mounted between the battery unit and the cover, wherein the circuit board facilitates an electrical connection between an electrode of the battery unit and the at least one connector.

In some non-limiting embodiments or aspects, the first electronic module comprises a motor controller, and the second electronic module comprises a wireless communication module and a battery unit.

Further non-limiting embodiments or aspects are set forth in the following numbered clauses:
Clause 1: A connector interface, comprising: a housing including at least one opening; a circuit board within the housing, wherein the circuit board includes a plurality of electrical contacts; a plurality of flexible conductive members on the circuit board over the plurality of electrical contacts, wherein the plurality of flexible conductive members extends through the at least one opening of the housing, and wherein the plurality of flexible conductive members is configured to come into electrical contact with the plurality of electrical contacts when pressed toward the plurality of electrical contacts.
Clause 2: The connector interface of clause 1, wherein the plurality of electrical contacts includes a pair of electrical contacts electrically coupled to an internal device comprising at least one of the following: a microcontroller, wireless communications circuitry, or any combination thereof.
Clause 3: The connector interface of clause 1 or 2, wherein the internal device is configured to receive a supply of electric power from a DC power source electrically coupled to a corresponding pair of flexible conductive members of the plurality of flexible conductive members pressed into electrical contact with the pair of electrical contacts.
Clause 4: The connector interface of any of clauses 1-3, further comprising: the microcontroller, wherein the microcontroller is configured to control a supply of electric power from a DC power source to a power consuming component electrically coupled to a corresponding pair of flexible conductive members of the plurality of flexible conductive members pressed into electrical contact with the pair of electrical contacts.
Clause 5: The connector interface of any of clauses 1-4, wherein the microcontroller is further configured to communicate data with the power consuming component via an electrical contact of the pair of electrical contacts and a corresponding flexible conductive member of the pair of corresponding flexible conductive members pressed into electrical contact with the electrical contact.
Clause 6: The connector interface of any of clauses 1-5, wherein the plurality of electrical contacts further includes at least one further electrical contact electrically coupled to the microcontroller, and wherein the microcontroller is configured to communicate data with the power consuming component via the at least one further electrical contact and a corresponding at least one further flexible conductive member of the plurality of flexible conductive members electrically coupled to the power consuming component and pressed into electrical contact with the at least one further electrical contact.
Clause 7: The connector interface of any of clauses 1-6, wherein the housing includes a front side and a rear side opposite the front side, wherein the housing is configured to mate with a removable battery pack by receiving the removable battery pack within a recess in one of the front side and the rear side of the housing, wherein a side of the housing between the front side and the rear side includes a pocket, and wherein the at least one opening of the housing is located in the pocket of the housing and the plurality of flexible conductive members extends through the at least one opening of the housing and into the pocket.
Clause 8: The connector interface of any of clauses 1-7, further comprising: a panel configured to be connected to the housing, wherein the panel includes an inner surface and an outer surface opposite the inner surface, wherein at least a portion of the panel is configured to be received within the pocket in the side of the housing, and wherein the outer surface of the at least a portion of the panel received within the pocket is inline with an outer surface of the side of the housing proximate the pocket.
Clause 9: The connector interface of any of clauses 1-8, wherein the inner surface of the panel includes a cavity.
Clause 10: The connector interface of any of clauses 1-9, further comprising: at least one fastener configured to be received through the panel and fastened to the housing.
Clause 11: The connector interface of any of clauses 1-10, wherein the pocket includes at least one component configured to form at least one snap fit connection with at least one corresponding component of the panel.
Clause 12: The connector interface of any of clauses 1-11, wherein the plurality of flexible conductive members that extends through the at least one opening of the housing fluidically seals the at least one opening of the housing.
Clause 13: The connector interface of any of clauses 1-12, wherein each flexible conductive member of the plurality of flexible conductive members includes a dome portion extending over a corresponding electrical contact of the plurality of electrical contacts and a base portion that extends from the dome portion and is in physical contact with an area of the circuit board surrounding the corresponding electrical contact.
Clause 14: The connector interface of any of clauses 1-13, wherein the dome portion of each flexible conductive member includes a post portion that extends in a first direction through a corresponding opening of the at least one opening in the housing and a tab portion that extends in a second direction opposite the first direction toward the corresponding electrical contact of the plurality of electrical contacts.
Clause 15: The connector interface of any of clauses 1-14, wherein the base portion of each flexible conductive member includes at least one leg portion configured to be connected to at least one side of the circuit board between a first face of the circuit board including the plurality of electrical contacts and a second face of the circuit board opposite the first face of the circuit board.
Clause 16: The connector interface of any of clause 1-15, further comprising: a frame configured to carry the circuit board and the plurality of flexible conductive members, wherein the frame includes one or more openings configured to receive one or more fasteners to be fastened to the housing with the plurality of flexible conductive members extending through the at least one opening of the housing.
Clause 17: The connector interface of any of clauses 1-16, further comprising: a plate including a first surface and a second surface opposite the first surface, wherein the first surface includes a first plate electrical contact and a second plate electrical contact, wherein the second surface includes a third plate electrical contact and a conductive tab that extends from the second surface of the plate, wherein the first plate electrical contact is electrically coupled to the third plate electrical contact, and wherein the second plate electrical contact is electrically coupled to the conductive tab; and a panel configured to be connected to the housing, wherein, when the panel is connected to the housing with the plate between the panel and the housing, the first surface of the plate facing the housing, and a coin cell battery between the plate and the panel, the panel presses a first terminal of the coin cell battery at a first face of the coin cell battery into electrical contact with the third plate electrical contact on the second surface of the plate and the conductive tab into electrical contact with a second terminal of the coin cell battery at a side of the coin cell battery that extends from a second face of the coin cell battery opposite the first face, and presses the first plate electrical contact into electrical contact with a first flexible conductive member of the plurality of flexible conductive members and the second plate electrical contact into electrical contact with a second flexible conductive member of the plurality of flexible conductive members to press the first flexible conductive member into electrical contact with a corresponding first electrical contact of the plurality of electrical contact and the second flexible conductive member into electrical contact with a corresponding second electrical contact of the plurality of electric contacts.
Clause 18: The connector interface of any of clauses 1-17, wherein the panel includes an inner surface and an outer surface opposite the inner surface, wherein the inner surface of the panel includes a cavity configured to receive the coin cell battery and the plate.
Clause 19: The connector interface of any of clauses 1-18, wherein the plate includes a circuit board, wherein the circuit board includes wireless communications circuitry, and wherein the wireless communications circuitry is configured to receive a supply of electric power from the coin cell battery.
Clause 20: The connector interface of any of clauses 1-19, wherein the plurality of flexible conductive members extends a same distance from the at least one opening of the housing.
Clause 21: The connector interface of any of clauses 1-20, wherein the plurality of flexible conductive members includes a first flexible conductive member and a second flexible conductive member, wherein the first flexible conductive member extends from a first opening of the at least one opening of the housing a first distance, and wherein the second flexible conductive member extends from a second opening of the at least one opening of the housing a second distance that is less than the first distance.
Clause 22: The connector interface of any of clauses 1-21, further comprising: a plate including a first surface and a second surface opposite the first surface, wherein the first surface includes a first electrical contact and a second electrical contact, wherein the first electrical contact is electrically coupled to the second electrical contact; and a panel configured to be connected to the housing, wherein, when the panel is connected to the housing with the plate between the panel and the housing, the first surface of the plate facing the housing, and a coin cell battery between the plate and the housing, the panel presses the first electrical contact on the first surface of the plate into electrical contact with a first flexible conductive member of the plurality of flexible conductive members to press the first flexible conductive member into electrical contact with a first electrical contact of the plurality of electrical contacts, presses a first terminal of the coin cell battery at a first face of the coin cell battery into electrical contact with the second electrical contact on the first surface of the plate, presses a second terminal of the coin cell battery at a second face of the coin cell battery opposite the first face into electrical contact with a second flexible conductive member of the plurality of flexible conductive members to press the second flexible conductive member of the plurality of flexible conductive members into electrical contact with a second electrical contact of the plurality of electrical contacts.
Clause 23: The connector interface of any of clauses 1-22, wherein the panel includes an inner surface and an outer surface opposite the inner surface, wherein the inner surface of the panel includes a cavity configured to receive the plate and the coin cell battery, and wherein a portion of the plate including the first electrical contact on the first surface of the plate extends outside an area defined by a circumference of the coin cell battery when the plate and the coin cell battery are received within the cavity of the panel.
Clause 24: The connector interface of any of clauses 1-23, wherein the plate includes a circuit board, wherein the circuit board includes wireless communications circuitry, and wherein the wireless communications circuitry is configured to receive a supply of electric power from the coin cell battery.
Clause 25: An electric power tool, comprising: a housing that includes a front side and a rear side, wherein the housing is configured to mate with a removable battery pack by receiving the removable battery pack within a recess in one of the front side and the rear side of the housing, wherein a side of the housing between the front side and the rear side includes a pocket, and wherein the pocket includes at least one opening; a circuit board within the housing, wherein the circuit board includes a plurality of electrical contacts; a plurality of flexible conductive members on the circuit board over the plurality of electrical contacts, wherein the plurality of flexible conductive members extends through the at least one opening, and wherein the plurality of flexible conductive members is configured to come into electrical contact with the plurality of electrical contacts when pressed toward the plurality of electrical contacts.
Clause 26: A connector interface, comprising: a housing that includes an opening; a female connector within the opening, wherein the female connector includes a plurality of electrical contacts configured to be electrically coupled to a plurality of further electrical contacts of a male connector when the male connector is received within the female connector, wherein the plurality of electrical contacts is electrically coupled to at least one of the following: a microcontroller within the housing, wireless communications circuitry within the housing, or any combination thereof; a plate including a first surface and a second surface opposite the first surface, wherein the second surface includes a plate electrical contact and a conductive tab that extends from the second surface of the plate, wherein the plate electrical contact is electrically coupled to a first further electrical contact of the male connector, and wherein the conductive tab is electrically coupled to a second further electrical contact of the male connector; and a panel configured to be connected to the housing, wherein, when the panel is connected to the housing with the plate between the panel and the housing, the first surface of the plate facing the housing, a coin cell battery between the plate and the panel, and the male connector received within the female connector, the panel presses a first terminal of the coin cell battery at a first face of the coin cell battery into electrical contact with the plate electrical contact on the second surface of the plate and the conductive tab into electrical contact with a second terminal of the coin cell battery at a side of the coin cell battery that extends from a second face of the coin cell battery opposite the first face to provide a supply of electric power from the coin cell battery to the at least one of the following: the microcontroller within the housing, the wireless communications circuitry within the housing, or any combination thereof.
Clause 27: A power tool comprising: a housing forming a motor housing portion, a handle extending from the motor housing portion, and a battery receptacle formed at a foot of the handle opposite the motor housing portion, the battery receptacle including a first sidewall and a second sidewall extending substantially parallel to a plane that extends through the handle and the motor housing portion; an electric motor disposed within the motor housing portion; a first electronic module mounted within the housing; a battery terminal block formed in the battery receptacle for making electric contact with a battery pack removably received in the battery receptacle; a recess formed into the first sidewall of the battery receptacle along a lateral direction that is substantially perpendicular to the plane; a second electronic module laterally mounted laterally into the recess; a cover that covers the second electronic module within the recess; and at least one conductive connector disposed through the first sidewall along the lateral direction in contact with the second electronic module to couple the first electronic module to the second electronic module.
Clause 28: The power tool of clause 27, wherein the first electronic module comprises a wireless communication module and an antenna, and the second electronic module comprises a battery unit.
Clause 29: The power tool of clause 27 or 28, wherein the second electronic module further includes a circuit board mounted between the battery unit and the first sidewall, wherein the circuit board is electrically connected to two electrodes of the battery unit, and the at least one conductive connector is in contact with the circuit board.
Clause 30: The power tool of any of clauses 27-29, wherein the second electronic module further includes a circuit board mounted between the battery unit and the cover, wherein the circuit board facilitates an electrical connection between an electrode of the battery unit and the at least one connector.
Clause 31: The power tool of any of clauses 27-30, wherein the first electronic module comprises a motor controller, and the second electronic module comprises a wireless communication module and a battery unit.

These and other features and characteristics of the present disclosure, as well as the methods of operation and functions of the related elements of structures and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the disclosed subject matter.

### BRIEF DESCRIPTION OF THE DRAWINGS

Additional advantages and details are explained in greater detail below with reference to the non-limiting, exemplary embodiments that are illustrated in the accompanying schematic figures, in which:
FIG. 1 depicts a side view of a power tool with a housing half removed, according to some non-limiting embodiments or aspects;
FIG. 2A depicts a partially exploded perspective view of a connector interface, according to some non-limiting embodiments or aspects;
FIG. 2B depicts another partially exploded perspective view of a connector interface, according to some non-limiting embodiments or aspects;
FIG. 2C depicts a perspective view of a connector interface with an exploded panel, according to some non-limiting embodiments or aspects;
FIG. 2D a perspective view of a connector interface with a connected panel, according to some non-limiting embodiments or aspects;
FIG. 3A depicts a cross-sectional view of a connector interface including flexible conductive members on a circuit board including electrical contacts, according to some non-limiting embodiments or aspects;
FIG. 3B depicts a cross-sectional view of a connector interface including flexible conductive members being pressed into electrical contact with electrical contacts on a circuit board by a plate, according to some non-limiting embodiments or aspects;
FIG. 4A depicts a side view of a connector interface, according to some non-limiting embodiments or aspects;
FIG. 4B depicts a cross-sectional view along section cut A-A of FIG. 4A;
FIG. 4C depicts a magnified view of a portion of FIG. 4B;
FIG. 5A depicts an exploded perspective view of components of a connector interface, according to some non-limiting embodiments or aspects;
FIG. 5B depicts an exploded side view of components of a connector interface, according to some non-limiting embodiments or aspects;
FIG. 5C depicts an assembled view of components of a connector interface, according to some non-limiting embodiments or aspects;
FIGS. 6A and 6B depict perspective views of a connector interface with a connected panel, according to some non-limiting embodiments or aspects;
FIG. 6C depicts a depicts a partially exploded perspective view of a connector interface, according to some non-limiting embodiments or aspects;
FIG. 6D depicts another partially exploded perspective view of a connector interface, according to some non-limiting embodiments or aspects;
FIG. 6E depicts a perspective view of a connector interface, according to some non-limiting embodiments or aspects;
FIG. 6F depicts a perspective view of a connector interface including a coin cell battery pressed into electrical contact with a flexible conductive member, according to some non-limiting embodiments or aspects;
FIG. 6G depicts a depicts a perspective view of a connector interface including a plate pressed into electrical contact with a coin cell battery and another flexible conductive member, according to some non-limiting embodiments or aspects;
FIG. 7 depicts a plate of a connector interface, according to some non-limiting embodiments or aspects;
FIG. 8A depicts a perspective view of a connector interface including flexible conductive members on a circuit board, according to some non-limiting embodiments or aspects;
FIG. 8B depicts a side view of a connector interface including flexible conductive members on a circuit board, according to some non-limiting embodiments or aspects;
FIG. 8C depicts a cross-sectional view of a connector interface including flexible conductive members on a circuit board including electrical contacts, according to some non-limiting embodiments or aspects;
FIG. 8D depicts a cross-sectional view of a connector interface including a flexible conductive member being pressed into electrical contact with an electrical contact on a circuit board by a coin cell battery, according to some non-limiting embodiments or aspects;
FIG. 8E depicts a cross-sectional view of a connector interface including another flexible conductive member being pressed into electrical contact with an electrical contact on a circuit board by a plate, according to some non-limiting embodiments or aspects;
FIGS. 9A-9C depict partially exploded perspective views of a connector interface, according to some non-limiting embodiments or aspects; and
FIGS. 9D and 9E depict perspective views of a connector interface with a connected panel, according to some non-limiting embodiments or aspects.

### DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the embodiments as they are oriented in the drawing figures. However, it is to be understood that the embodiments may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting.

It is to be understood that the present disclosure may assume various alternative variations and step sequences, except where expressly specified to the contrary. It is also to be understood that the specific devices and processes illustrated in the attached drawings, and described in the following specification, are simply exemplary and non-limiting embodiments or aspects. Hence, specific dimensions and other physical characteristics related to the embodiments or aspects disclosed herein are not to be considered as limiting.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise. In addition, reference to an action being "based on" a condition may refer to the action being "in response to" the condition. For example, the phrases "based on" and "in response to" may, in some non-limiting embodiments or aspects, refer to a condition for automatically triggering an action (e.g., a specific operation of an electronic device, such as a computing device, a processor, and/or the like).

Some of the techniques described herein may be implemented by one or more computer programs executed by one or more processors residing, for example on a power tool or power equipment. The computer programs may include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

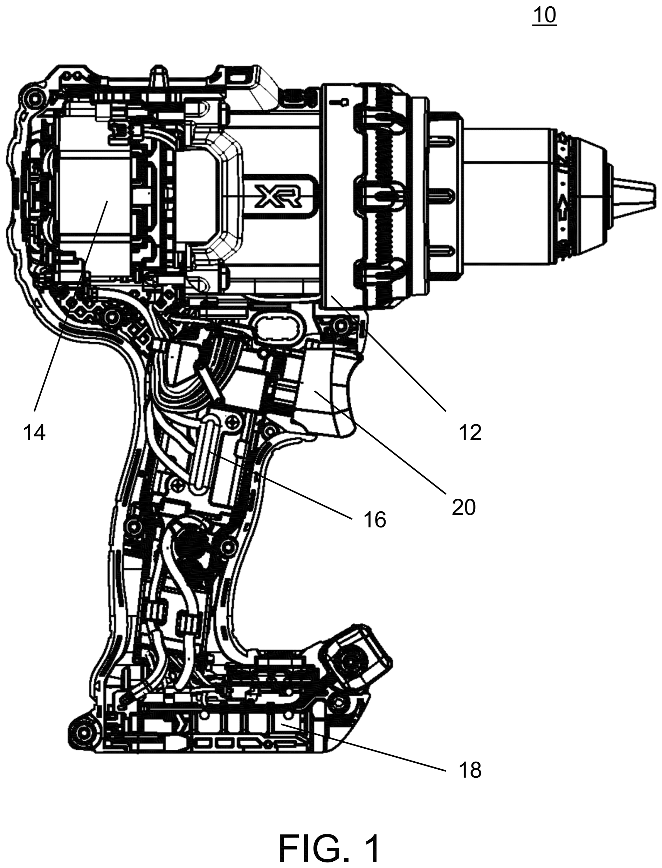

FIG. 1 depicts a side view of power tool 10 (e.g., a drill, etc.) with tool housing 12 half removed, according to some non-limiting embodiments or aspects. As shown in FIG. 1, power tool 10 may include tool housing 12, electric motor 14 (e.g., a high-power electric motor, etc.) disposed in tool housing 12 (e.g., in a motor housing portion, etc.), and/or control module 16 disposed in tool housing 12 (e.g., within a handle extending from the motor housing portion, etc.). Electric motor 14 may include a brushed DC motor, a brushless DC motor, such as an electric brushless direct-current (BLDC) drive motor, and/or the like.

Control module 16 may include: a microcontroller, a microprocessor, or other programmable semiconductor chip and power switching components for controlling a commutation of electric motor 14. Alternatively, control module 16 may include an Application Specific Integrated Circuit (ASIC) and the power switching components. Control module 16 may be coupled to power interface 18, which may be coupled to a DC power source (e.g., a removable battery pack, etc.) or an AC power source (e.g., a 120V AC, etc.). Control module 16 may control or regulate a supply of electric power from power interface 18 to the electric motor 14, for example, based on a signal from an input unit (e.g., trigger mechanism 20, etc.) electrically coupled to control module 16. Details of the components and operation of the control module 16 may be found in US Patent No. 10,497,524 and US Patent No. 10,541,588, which are both incorporated herein by reference in their entireties. An exemplary power tool, including a brushless direct-current motor utilized therein, may be found in US Patent No. 11,283,325, which is incorporated herein by reference in its entirety. An exemplary power tool such as a drill may be found in US Patent Publication No. 2021/0170564, which is incorporated herein by reference in its entirety.

It is noted herein that while some non-limiting embodiments or aspects of the present disclosure are described with reference to a drill, non-limiting embodiments or aspects of a connector interface discussed herein can be used with any system for controlling a supply of electric power from power interface 18 to a power consuming component, such as any cordless (battery operated) device, and particularly in any cordless (battery operated) power tool/device. For example, non-limiting embodiments or aspects of a connector interface discussed herein may be used with a brushless motor in an impact driver, torque wrench, grinder, saw, sander, tapper, nailer, powered cart and wheel barrow, lawn mower, lawn and garden tractor, lawn trimmer, lawn edger, lawn and leaf blower or sweeper, hedge trimmer, pruner, lopper, chainsaw, rake, pole saw, tiller, cultivator, aerator, log splitter, post hole digger, trencher, stump grinder, snow thrower (or any other snow or ice cleaning or clearing implement), lawn, wood and leaf shredder and chipper, lawn and/or leaf vacuum, pressure washer, lawn equipment, garden equipment, driveway sprayer and spreader, sports field marking equipment, or any other power tool or power consuming equipment.

In some non-limiting embodiments or aspects of the present disclosure, power tool 10 may include an internal wireless communication module. The wireless communication module may be located at a foot of power tool 10 proximate power interface 18, within the tool handle portion proximate control module 16 (e.g., provided integrally as a part of control module 16 or as a separate module), or any other part of power tool 10. Wireless communication module may include a wireless controller (e.g., a Bluetooth^{®} controller or other communication controller) and an antenna, and the wireless communication module may be powered by the removeable battery pack. However, in some non-limiting embodiments or aspects, a secondary power source such as a coin cell battery or a button battery may be desirable to power the wireless communication module when the battery pack is detached from the power tool to allow continuous location tracking and data communication with the wireless communication module. If the secondary power source is located internally, servicing and replacing the secondary power source may require disassembly of the tool housing, which is burdensome to the tool operator. In some power tools, a window for accessing and replacing the secondary power source may be provided through the tool housing. However, such designs often compromise the structural integrity and rigidity of the power tool.

Non-limiting embodiments or aspects of the present disclosure thus provide a connector interface 100 to support a secondary power source (e.g., coin cell battery, etc.) external to the main body of the tool housing 12, within a dedicated compartment that is accessible externally without disassembling the power tool housing. The connector interface 100 makes electrical connection with the positive and negative electrodes of the secondary power source to establish a connection between the wireless communication module and the secondary power source. With this arrangement, the secondary power source is capable of providing power to the wireless communication module in a serviceable and easy to use manner without significant modifications to the outer geometry of the tool housing and without compromising the structural integrity of the power tool housing.

In further and/or alternative non-limiting embodiments or aspects of the present disclosure, the entirety of the wireless communication (including a wireless controller and an antenna, and in some non-limiting embodiments or aspects, including the secondary power source) may be provided within the compartment external to the power tool housing. In these non-limiting embodiments or aspects, connector interface 100 may be utilized to establish a wired connection between the control module 16 and the wireless communication module.

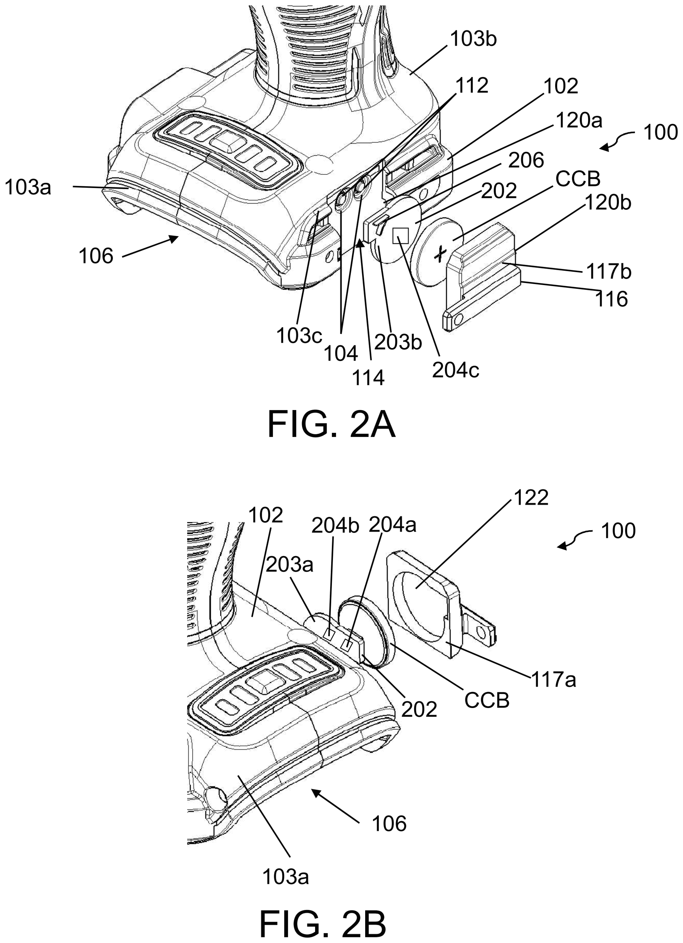

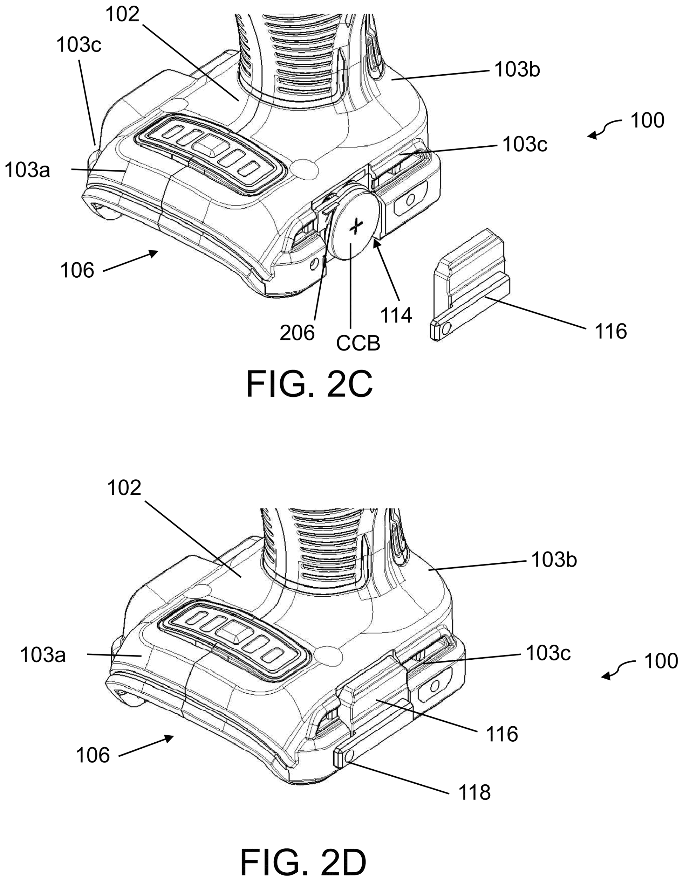

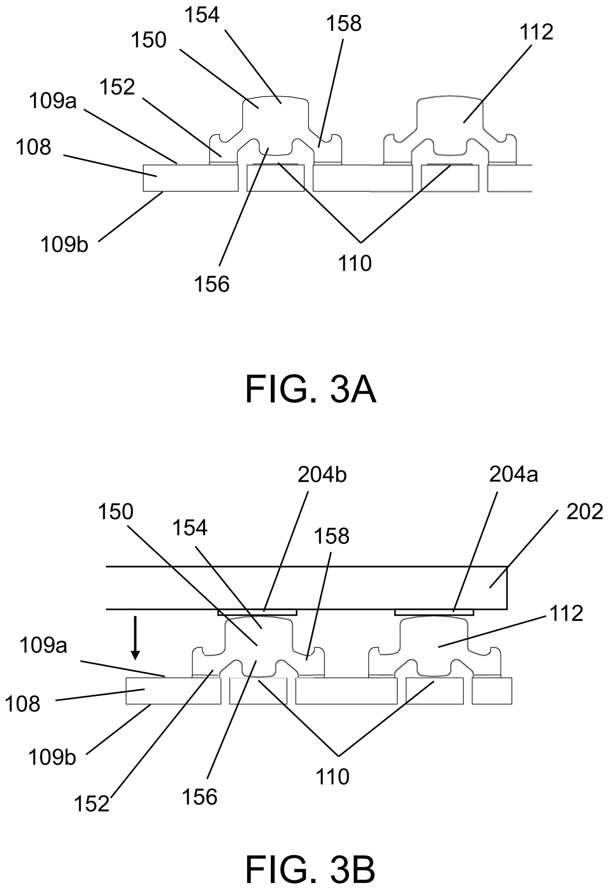

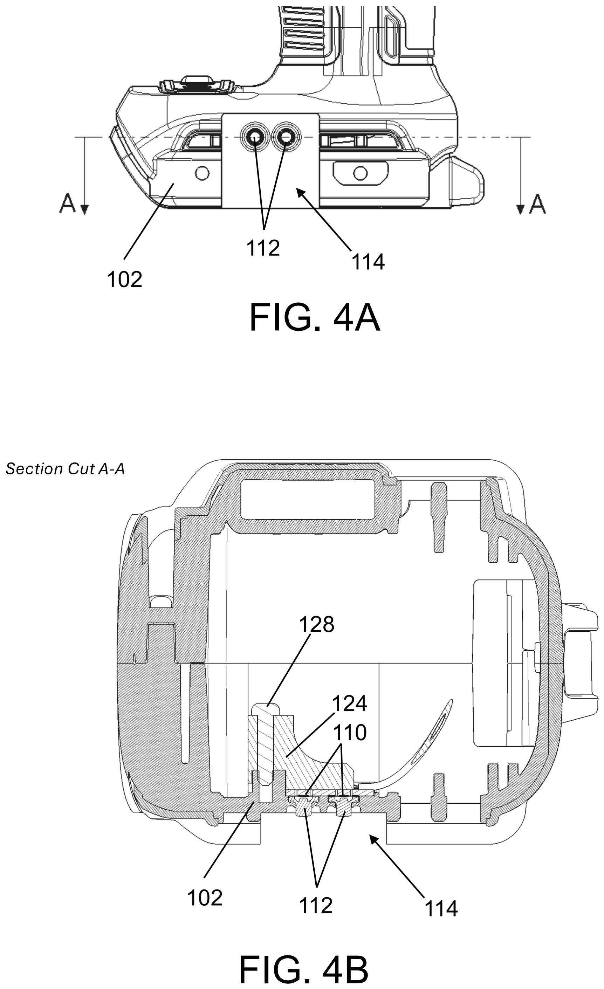

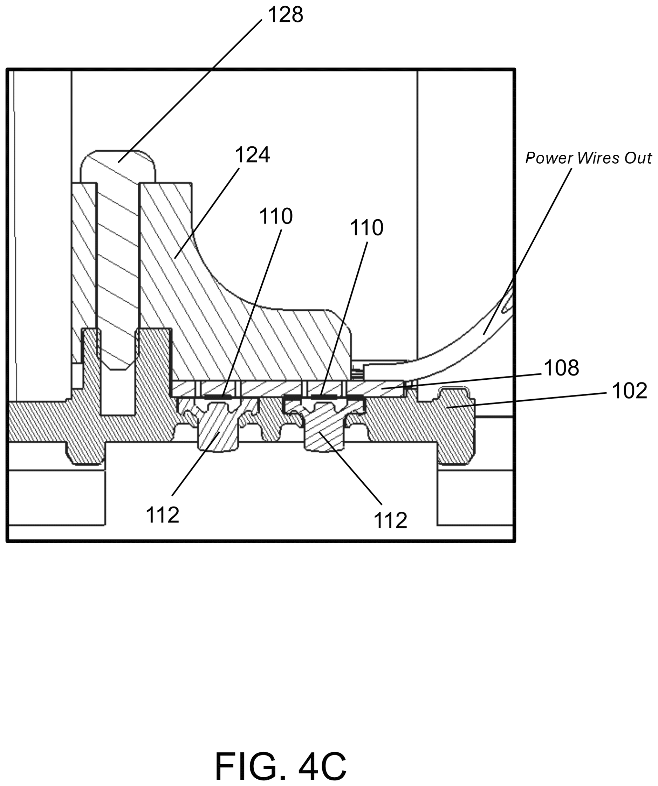

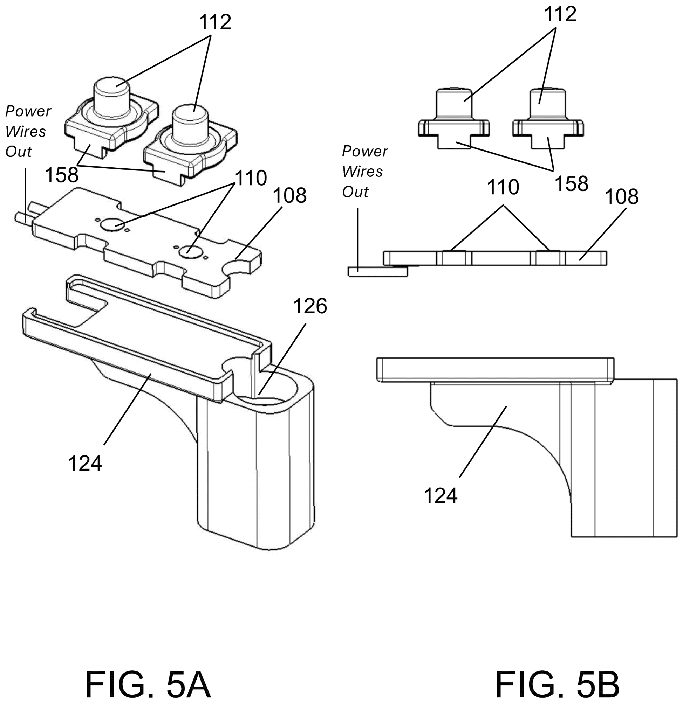

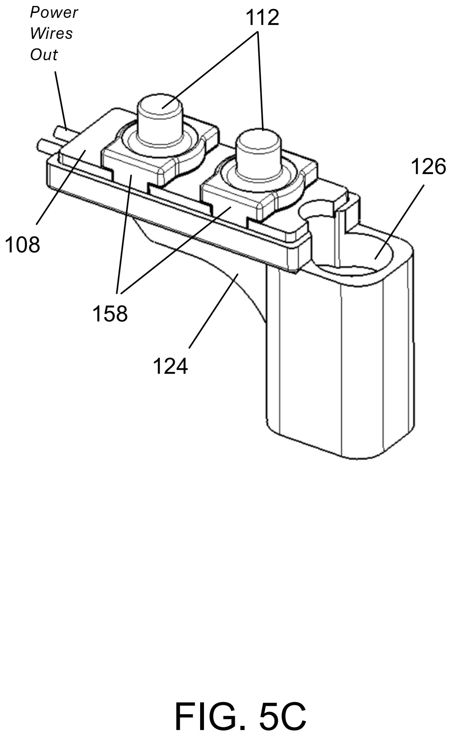

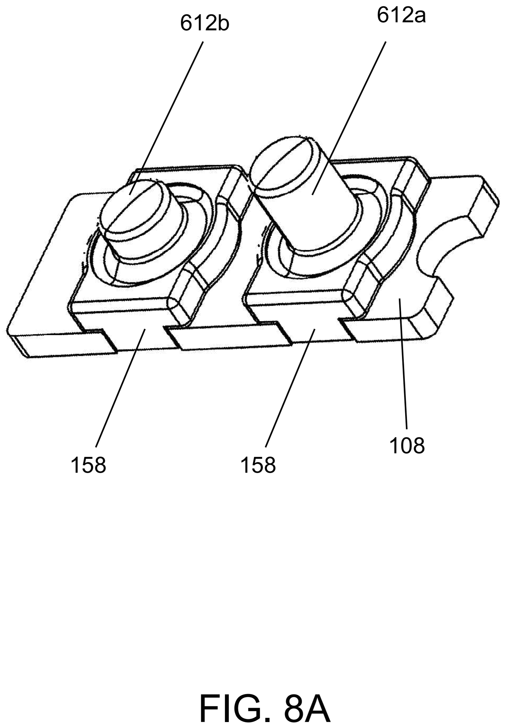

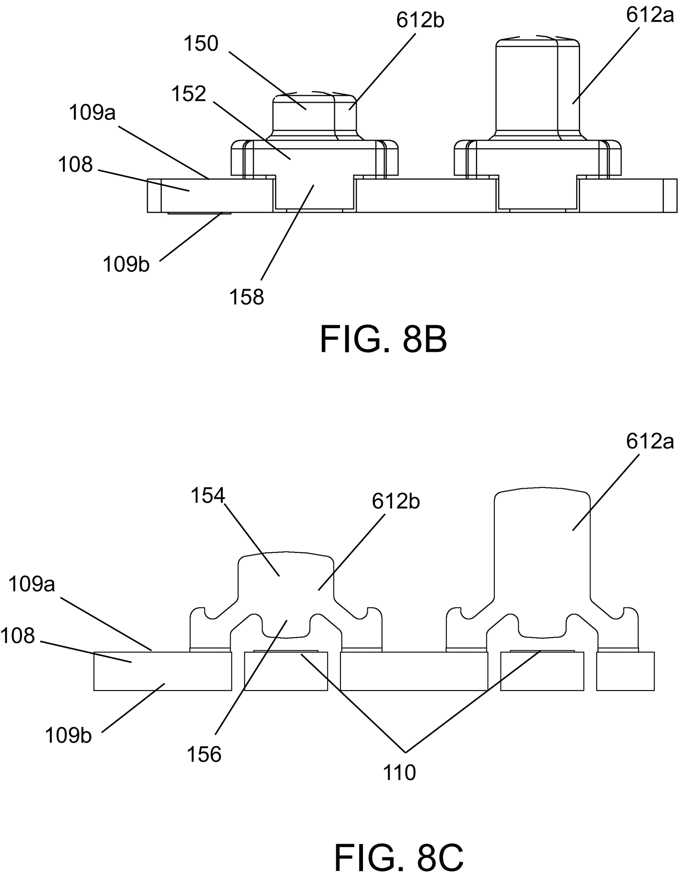

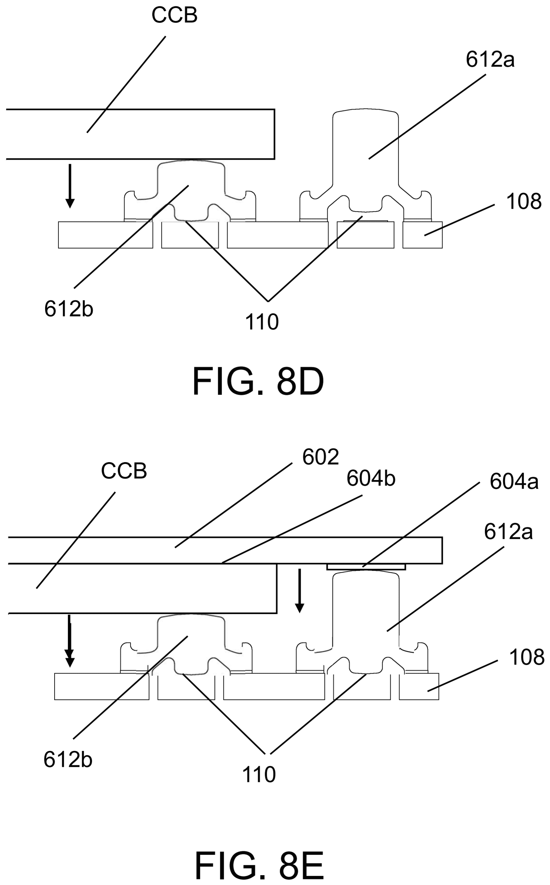

Some non-limiting embodiments or aspects of a connector interface 100 are described herein with reference to FIGS. 2A-8E. Connector interface 100 may be disposed in, received in, or include housing 102 (e.g., tool housing 12, etc.) that includes at least one opening 104 (e.g., a plurality of openings 104, etc.). For example, housing 102 may include front side 103a and rear side 103b opposite front side 103a, and housing 102 may be configured to mate with a removable battery pack (not shown) by receiving the removable battery pack (e.g., via power interface 18, etc.) within battery receptacle 106 formed as a recess in one of front side 103a and rear side 103b of housing 102. Opposing lateral sides 103c of housing 102 may extend between front side 103a and rear side 103b. For example, battery receptacle 106 may include a first sidewall and a second sidewall (e.g., the opposing lateral sides 103c) extending substantially parallel to a plane that extends through the handle and the motor housing portion of tool housing 12. A battery terminal block may be formed in the battery receptacle 106 for making electric contact with a battery pack removably received in the battery receptacle 106, and/or a recess (e.g., pocket 114, etc.) may be formed into the first sidewall of the battery receptacle 106 along a lateral direction that is substantially perpendicular to the plane.

Connector interface 100 may include circuit board 108. Circuit board 108 may include a plurality of electrical contacts 110. Connector interface 100 may include a plurality of flexible conductive members 112 on circuit board 108 over the plurality of electrical contacts 110. The plurality of flexible conductive members 112 may extend through the plurality of openings 104 of housing 102. The plurality of flexible conductive members 112 may be configured to come into electrical contact with the plurality of electrical contacts 110 when pressed toward the plurality of electrical contacts 110.

The plurality of flexible conductive members 112 may include a conductive elastomer, which may be any material exhibiting elastic, resiliently deformable, and/or rubber-like properties. Such material includes, but is not limited to, silicone, nitrile, butyl, vulcanized rubber, etc. In an embodiment, conductive member 112 is provided with a suitable material with Shore A hardness level (e.g., between 30 to 80) cured with a distributed filling of conductive material. In an embodiment, the fill may include any conductive material, including but not limited to, conductive carbon black, conductive metallic colloid, graphite, conductive metal particles, etc. In an embodiment, the conductive member 112 is manufactured and cured with a captive matrix of conductive fill, resulting in an elastically flexible elastomer membrane the conductivity of which can be modulated by compression against a surface. For example, the plurality of flexible conductive member 112 may be similar in material composition and/or construction to conductive elastomer members used for variable-speed switching operations, as described in US Patent Publication No. 2022/0376584, which is incorporated herein by reference in its entirety.

A lateral side 103c of housing 102 between front side 103a and rear side 103b may include pocket 114. For example, pocket 114 be defined by a sidewall of housing 102 surrounding battery receptacle 106 that extends inward from the lateral side 103c between front side 103a and rear side 103b. The sidewall of the housing 102 may include a support structure including guide rails for supporting the battery pack, and one or more air intake openings that allow entry of cooling air into the housing 102. The plurality of openings 104 of housing 102 may be located in pocket 114 of housing 102.

Connector interface 100 may include panel 116 configured to be connected to housing 102. Panel 116 may include inner surface 117a and outer surface 117b opposite inner surface 117a. At least a portion of panel 116 may be configured to be received within pocket 114 in lateral side 103c of housing 102. Outer surface 117b of the at least a portion of panel 116 received within pocket 114 may be in-line with (e.g., in-line with, in plane with, may not extend beyond, etc.) an outer surface of lateral side 103a of housing 102 proximate pocket 114. Accordingly, when assembled, at least a portion of the panel 116 forms a substantially uniform body with at least portions of the sidewall of the housing 102 so that panel 116 does not project extensively from the outer perimeter of the foot of the housing 102.

In some implementations, at least one fastener 118 may be configured to be received through panel 116 and fastened to housing 102. For example, the least one fastener 118 may secure or fix panel 116 to housing 102 with the at least a portion of panel 116 received within pocket 114 in lateral side 103c of housing 102.

In some implementations, pocket 114 may include at least one component 120a (e.g., a slot, a groove, etc.) that is configured to form at least one snap fit connection with at least one corresponding component 120b (e.g., a hook, a lip, etc.) of panel 116.

Inner surface 117a of panel 116 may include cavity 122. Cavity 122 may be configured to receive one or more components, such as a plate, a coin cell battery, a circuit board, and/or the like, and which are described in more detail herein.

The plurality of flexible conductive members 112 that extends through the plurality of openings 104 of housing 102 may fluidically seal the plurality of openings 104 of housing 102. For example, the plurality of flexible conductive members 112 may inhibit or prevent solvents, liquids, gases, and/or the like from entering an interior of housing 102 via the plurality of openings 104.

Each flexible conductive member of the plurality of flexible conductive members 112 may include dome portion 150 extending over a corresponding electrical contact of the plurality of electrical contacts 110 and base portion 152 that extends from dome portion 150 and is in physical contact with an area of circuit board 108 surrounding the corresponding electrical contact.

Dome portion 150 of each flexible conductive member of the plurality of flexible conductive members 112 may include post portion 154 that extends in a first direction through a corresponding opening of the plurality of openings 104 in housing 102 and/or tab portion 156 that extends in a second direction opposite the first direction toward the corresponding electrical contact of the plurality of electrical contacts 110.

Base portion 152 of each flexible conductive member of the plurality of flexible conductive members 112 may include at least one leg portion 158 configured to be connected to at least one side of circuit board 108 between a first face 109a of circuit board 108 that includes the plurality of electrical contacts 110 and a second face 109b of circuit board 108 opposite first face 109a of circuit board 108.

The plurality of flexible conductive members 112 may be molded and mounted on circuit board 108 in a normally open position (e.g., as a dome switch, etc.). For example, an external interface formed by the plurality of flexible conductive members 112 may not be electrically connected to an internal circuit until specific geometry is used to compress the plurality of flexible conductive members 112 against the plurality of electrical contacts 110. When an external device mechanically collapses the plurality of flexible conductive members 112 by pressing the plurality of flexible conductive members 112 into electrical contact with the plurality of electrical contacts 110, the electrical circuit is closed with the external interface connected to the internal circuit. In this way, unlike a typical discrete connection, exposure to electrostatic discharge (ESD) and/or direct access to internal circuits may be reduced or prevented when an external device is not connected.

Connector interface 100 may include frame 124 that is configured to carry circuit board 108 and/or the plurality of flexible conductive members 112. For example, frame 124 may include a tray-like carrier configured to receive circuit board 108 therein with the plurality of flexible conductive members 112 on circuit board 108 over the plurality of electrical contacts 110. Frame 124 may include one or more openings 126 configured to receive one or more fasteners 128 to be fastened to housing 102 with the plurality of flexible conductive members 112 extending through the plurality of openings 104 of housing 102. For example, frame 124 may be configured to secure or fix circuit board 108 against an inner wall of housing 102 with the plurality of flexible conductive members 112 extending through the plurality of openings 104 of housing 102.

In some non-limiting embodiments or aspects, a first electronic module may be mounted within tool housing 12, and a second electronic module may be laterally mounted into the recess (e.g., pocket 114, etc.). At least one conductive connector (e.g., conductive member 112, conductive member 612, etc.) may be disposed through the first sidewall along the lateral direction in contact with the second electronic module to couple the first electronic module to the second electronic module. In an implementation, the first electronic module includes a wireless communication module and an antenna, and the second electronic module comprises a battery unit. In another implementation, the second electronic module further includes a circuit board mounted between the battery unit and the first sidewall, the circuit board is electrically connected to two electrodes of the battery unit, and the at least one conductive connector is in contact with the circuit board. In further implementation, the second electronic module further includes a circuit board mounted between the battery unit and the cover, and the circuit board facilitates an electrical connection between an electrode of the battery unit and the at least one connector. In a still further implementation, the first electronic module comprises a motor controller, and the second electronic module comprises a wireless communication module and a battery unit.

For example, the plurality of electrical contacts 110 may be electrically coupled to an internal device including at least one of the following: a microcontroller, wireless communications circuitry (e.g., a Near-field communication (NFC) enabled device, a radio-frequency identification (RFID) device, a Bluetooth^{®} device, etc.), or any combination thereof. For example, the plurality of electrical contacts 110 may be electrically coupled to one or more internal power tool electrical systems, such as, electric motor 14, control module 16, power interface 18, and/or the like. In some implementations, the plurality of electrical contacts 110 of circuit board 108 may include a pair of electrical contacts electrically coupled to an internal device including at least one of the following: a microcontroller, wireless communications circuitry e.g., a Near-field communication (NFC) enabled device, a radio-frequency identification (RFID) device, a Bluetooth^{®} device, etc.), or any combination thereof. For example, the internal device may be configured to receive a supply of electric power from a DC power source electrically coupled to a corresponding pair of flexible conductive members of the plurality of flexible conductive members 112 pressed into electrical contact with the pair of electrical contacts of the plurality of electrical contacts 110.

As another example, the microcontroller (e.g., control module 16, etc.) may be configured to control a supply of electric power from a DC power source to a power consuming component electrically coupled to a corresponding pair of flexible conductive members of the plurality of flexible conductive members 112 pressed into electrical contact with the pair of electrical contacts of the plurality of electrical contacts 110. For example, control module 16 may be powered by receiving the removable battery within battery receptacle 108 (e.g., in power interface 18) and provide power through connector interface 100 to an external power consuming device (e.g., a wireless communications circuit, a location tracking device, etc.) that is electrically coupled to a corresponding pair of flexible conductive members of the plurality of flexible conductive members 112 pressed into electrical contact with the pair of electrical contacts of the plurality of electrical contacts 110. In this way, some non-limiting embodiments or aspects of a connector interface may create an electrical connection to either power an internal device within a power tool housing via an external power source, or power an external device mounted to the power tool housing via an internal power source.

In some implementations, the microcontroller (e.g., control module 16, etc.) may be configured to communicate data with the power consuming component via an electrical contact of the pair of electrical contacts and a corresponding flexible conductive member of the pair of corresponding flexible conductive members pressed into electrical contact with the electrical contact. In some implementations, the plurality of electrical contacts may further include at least one further electrical contact (e.g., a third electrical contact in addition to the pair of electrical contacts, etc.) electrically coupled to the microcontroller, and the microcontroller may be configured to communicate data with the power consuming component via the at least one further electrical contact and a corresponding at least one further flexible conductive member (e.g., a third flexible conductive member in addition to the pair of flexible conductive members, etc.) of the plurality of flexible conductive members electrically coupled to the power consuming component and pressed into electrical contact with the at least one further electrical contact.

Referring to FIGS. 2A-5C, in some non-limiting embodiments or aspects, connector interface 100 may include plate 202 including first surface 203a and second surface 203b opposite first surface 203a. First surface 203a may include first plate electrical contact 204a and second plate electrical contact 204b. Second surface 203b may include third plate electrical contact 204c and conductive tab 206 (e.g., a metal tab, etc.) that extends from second surface 203b of plate 202. First plate electrical contact 204a may be electrically coupled to third plate electrical contact 204c, and second plate electrical contact 204b may be electrically coupled to conductive tab 206.

Cavity 122 of panel 116 may be configured to receive a secondary battery such as a coin cell battery CCB and plate 202. For example, a shape and a size cavity 122 may correspond to a shape and a size of coin cell battery CCB and plate 202. It should be understood that while some non-limiting embodiments or aspects are described with reference to a coin cell battery, any other type of energy storage device such as a capacitor, an accumulator, a lithium cell, etc. may be alternatively utilized in place of coin cell battery CCB.

When panel 116 is connected to housing 102 with plate 202 between panel 116 and housing 102, first surface 203a of plate 202 facing housing 102, and coin cell battery CCB between plate 202 and panel 116, panel 116 presses a first terminal of coin cell battery CCB at a first face of coin cell battery CCB into electrical contact with third plate electrical contact 204c on second surface 203b of plate 116 and conductive tab 206 into electrical contact with a second terminal of coin cell battery CCB at a side of coin cell battery CCB that extends from a second face of coin cell battery CCB opposite the first face, and presses first plate electrical contact 204a into electrical contact with a first flexible conductive member of the plurality of flexible conductive members 112 and the second plate electrical contact 204b into electrical contact with a second flexible conductive member of the plurality of flexible conductive members 112 to press the first flexible conductive member into electrical contact with a corresponding first electrical contact of the plurality of electrical contact 110 and the second flexible conductive member into electrical contact with a corresponding second electrical contact of the plurality of electric contacts 110.

In some non-limiting embodiments or aspects, plate 202 may include a circuit board. In an embodiment, circuit board may be utilized to facilitate an electrical connection between positive and negative electrodes of coin cell battery CCB and the plurality of conductive members 112 as described above. In a further and/or alternative embodiment, for example, the circuit board of plate 202 may include wireless communications circuitry (e.g., a Near-field communication (NFC) enabled device, a radio-frequency identification (RFID) device, a Bluetooth^{®} device, etc.), and the wireless communications circuitry may be configured to receive a supply of electric power from coin cell battery CCB (e.g., via first plate electrical contact 204a and/or third plate electrical contact 204c and second plate electrical contact 204b and/or conductive tab 206, etc.). The wireless communications circuitry may be configured to communicate with the control module of the power tool via the conductive members 112.

In some non-limiting embodiments or aspects, as show in FIGS. 2A-5C the plurality of flexible conductive members 112 may extend a same distance from the plurality of openings 104 of housing 102.

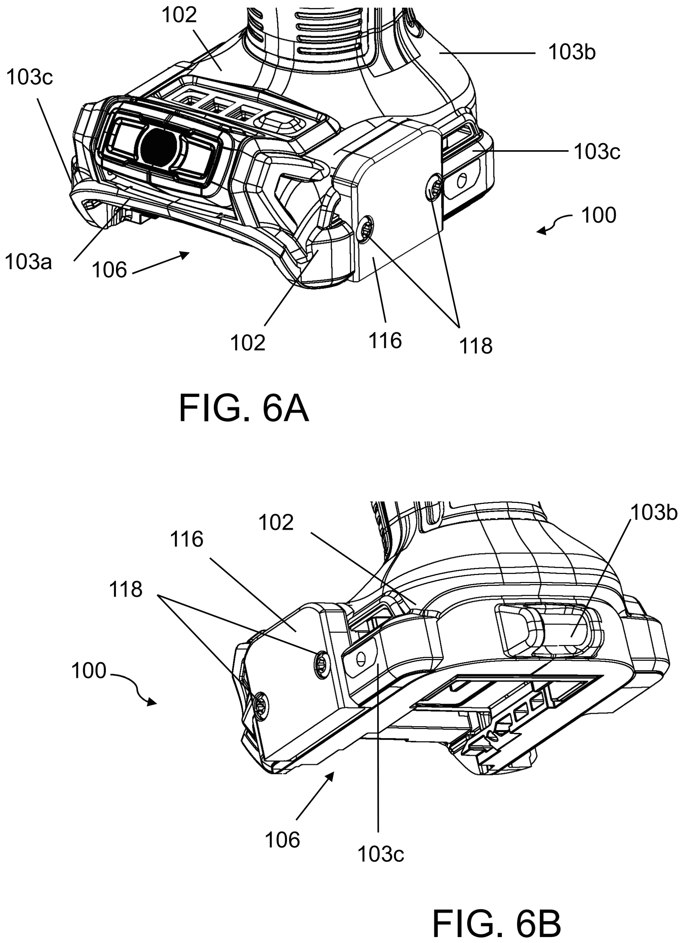

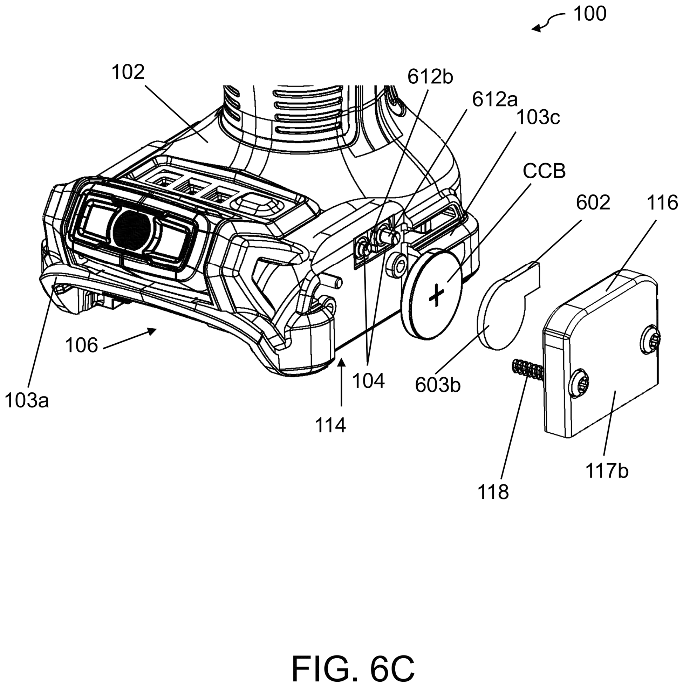

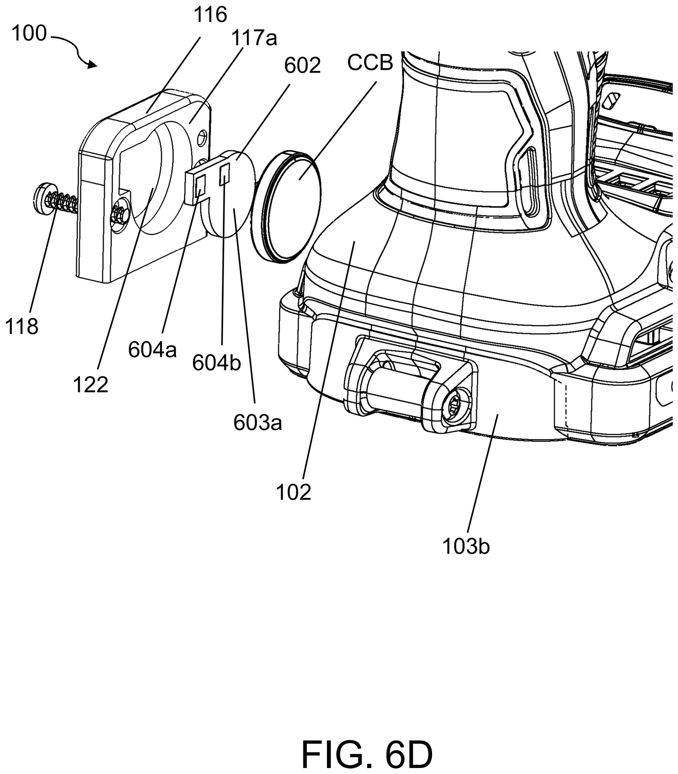

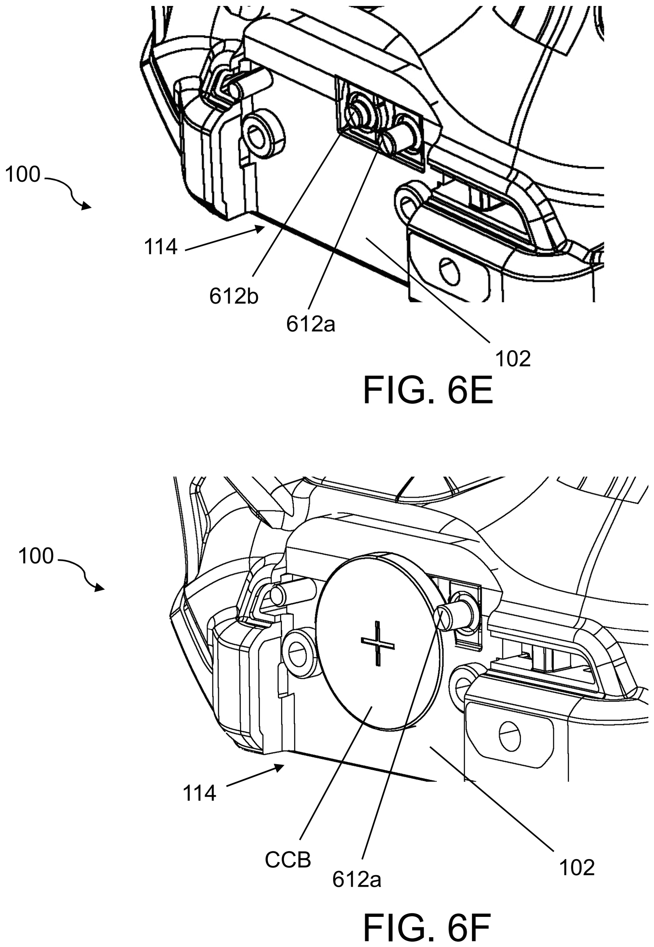

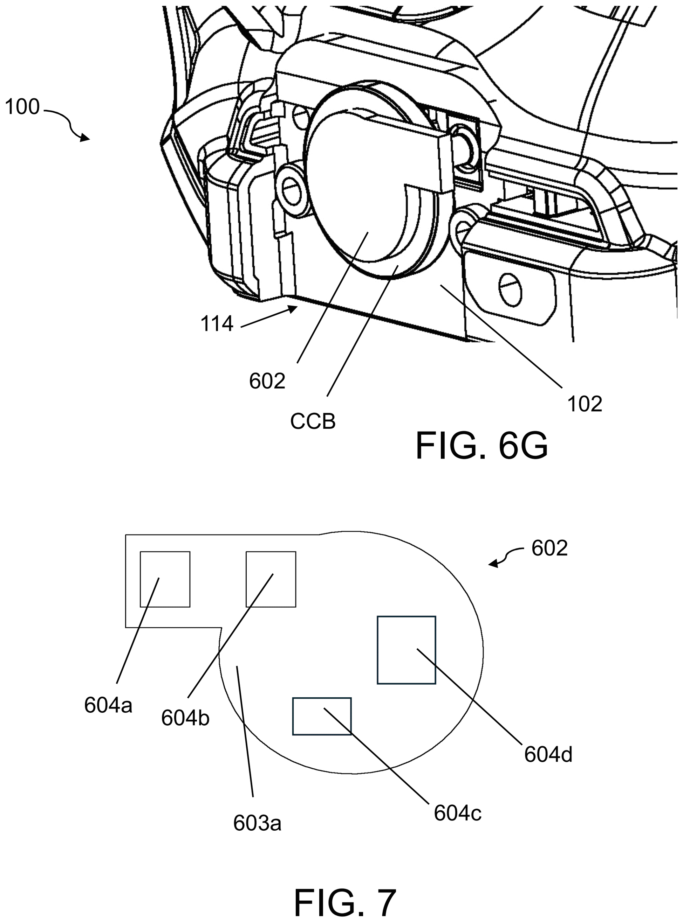

Referring to FIGS. 6A-8E, in some non-limiting embodiments or aspects, connector interface 100 may include plate 602 including first surface 603a and second surface 603b opposite first surface 603a. First surface 603a may include first electrical contact 604a and second electrical contact 604b. First electrical contact 604a may be electrically coupled to second electrical contact 604b.

As shown in FIGS. 6A-8E, in some non-limiting embodiment or aspects, the plurality of flexible conductive members 112 may include a first flexible conductive member 612a and a second flexible conductive member 612b, the first flexible conductive member 612a may extend from a first opening of the plurality of openings 104 of housing 102 a first distance, and the second flexible conductive member 612b may extend from a second opening of the plurality of openings 104 of housing 102 a second distance that is less than the first distance.

Cavity 122 of panel 116 may be configured to receive plate 602, and in some non-limiting embodiments or aspects, both coin cell battery CCB and plate 602. For example, a shape and a size cavity 122 may correspond to a shape and a size of plate 202, and in some non-limiting embodiments or aspects, both coin cell battery CCB and plate 602. A portion of plate 602 including first electrical contact 604a on first surface 603a of plate 602 may extend outside an area defined by a circumference of coin cell battery CCB when plate 602 and coin cell battery CCB are received within cavity 122 of panel 116.

In an example, conductive member 612a has a greater height than conductive member 612b, where the difference in height corresponds approximately to a thickness of coin cell battery CCB. In a mounted position, coin cell battery CCB is arranged to engage only conductive member 612b with a rear surface of coin cell battery CCB being substantially aligned with a post portion of conductive member 612a.

When panel 116 is connected to housing 102 with plate 602 between panel 116 and housing 102, first surface 603a of plate 602 facing housing 102, and coin cell battery CCB between plate 602 and housing 102, panel 116 presses first electrical contact 604a on first surface 603a of plate 602 into electrical contact with first flexible conductive member 612a of the plurality of flexible conductive members 112 to press first flexible conductive member 612a into electrical contact with a first electrical contact of the plurality of electrical contacts 110, presses a first terminal of coin cell battery CCB at a first face of coin cell battery CCB into electrical contact with second electrical contact 604b on first surface 603a of plate 602, presses a second terminal of coin cell battery CCB at a second face of coin cell battery CCB opposite the first face into electrical contact with second flexible conductive member 612b of the plurality of flexible conductive members 112 to press second flexible conductive member 612b of the plurality of flexible conductive members 112 into electrical contact with a second electrical contact of the plurality of electrical contacts 110.

In some non-limiting embodiments or aspects, plate 602 may include a circuit board. In an embodiment, circuit board may be utilized to facilitate an electrical connection between positive and negative electrodes of coin cell battery CCB and the plurality of conductive members 612 as described above. In a further and/or alternative embodiment, for example, the circuit board of plate 602 may include wireless communications circuitry (e.g., a Near-field communication (NFC) enabled device, a radio-frequency identification (RFID) device, a Bluetooth^{®} device, etc.), and the wireless communications circuitry may be configured to receive a supply of electric power from coin cell battery CCB (e.g., via first electrical contact 604a and second electrical contact 604b, etc.). The wireless communications circuitry, in an example, may include a wireless controller 604c (e.g., a Bluetooth^{®} controller, etc.) and an antenna 604d. The wireless communications circuitry may be configured to communicate with the control module 16 of the power tool 10 via the conductive members 612. For example, the wireless controller 604c may be electrically coupled to the control module 16 of the power tool via at least one of the conductive members 612 for wired communication with the control module 16.

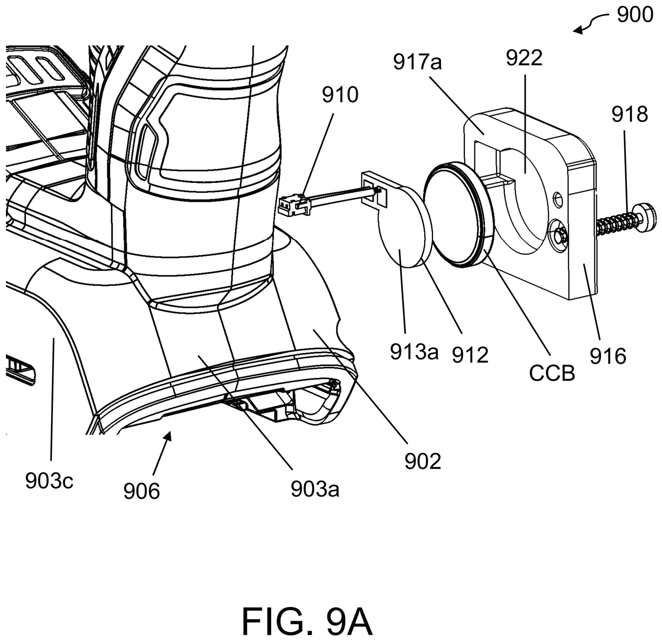

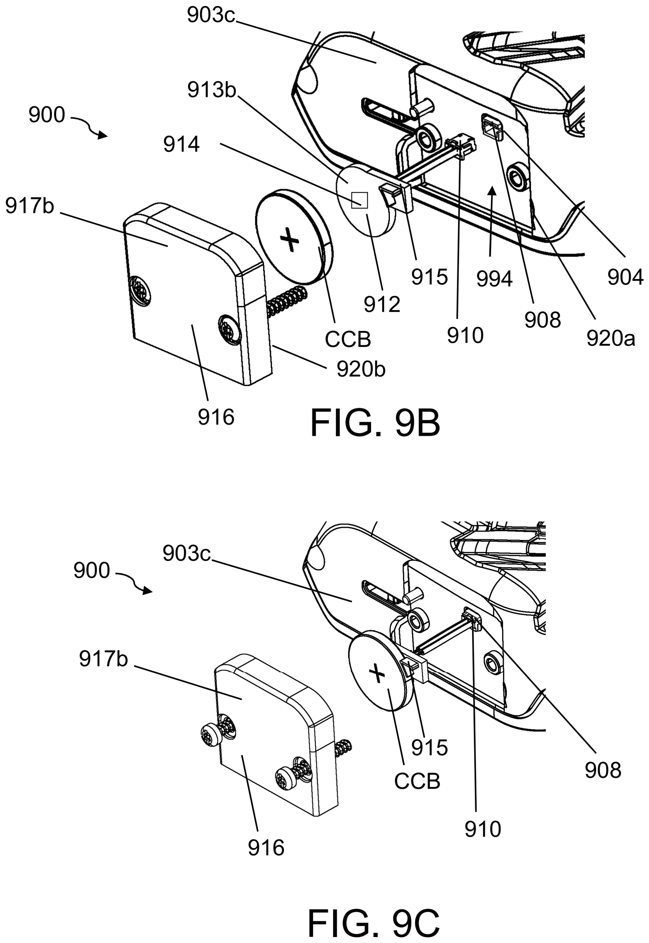

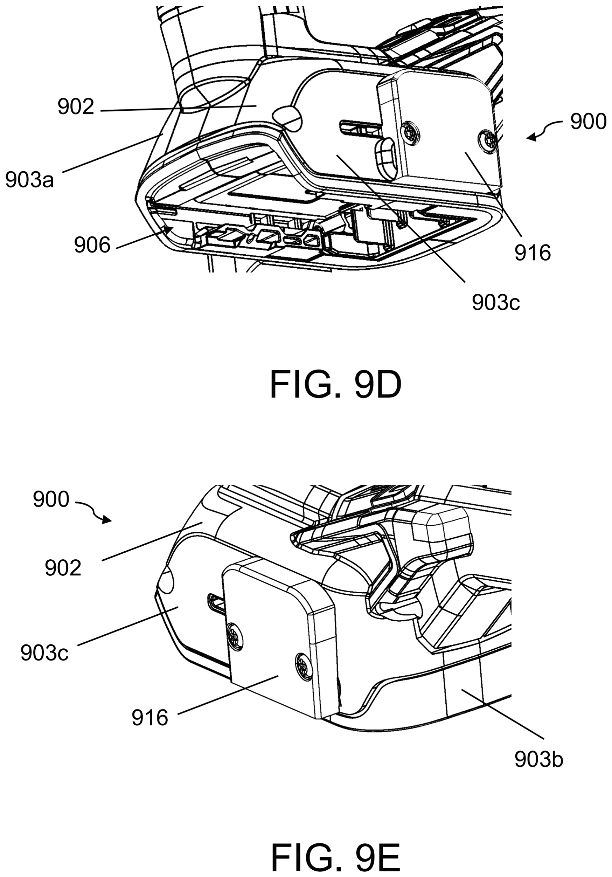

Some non-limiting embodiments or aspects of a connector interface 900 are described herein with reference to FIGS. 9A-9E. Connector interface 900 may be disposed in, received in, or include housing 902 (e.g., tool housing 12, etc.) that includes opening 904. For example, housing 902 may include front side 903a and rear side 903b opposite front side 903a, and housing 902 may be configured to mate with a removable battery pack (not shown) by receiving the removable battery pack (e.g., via power interface 18, etc.) within recess or battery receptacle 906 in one of front side 903a and rear side 903a of the housing 902. Opposing lateral sides 903c of housing 902 may extend between front side 903a and rear side 903b. For example, battery receptacle 106 may include a first sidewall and a second sidewall (e.g., the opposing lateral sides 903c) extending substantially parallel to a plane that extends through the handle and the motor housing portion of tool housing 12. A battery terminal block may be formed in the battery receptacle 906 for making electric contact with a battery pack removably received in the battery receptacle 106, and/or a recess (e.g., pocket 994, etc.) may be formed into the first sidewall of the battery receptacle 106 along a lateral direction that is substantially perpendicular to the plane.

Connector interface 900 may include female connector 908 within opening 904. Female connector 908 may include a plurality of electrical contacts configured to be electrically coupled to a plurality of further electrical contacts of male connector 910 when male connector 910 is received within female connector 908. The plurality of electrical contacts may be electrically coupled to an internal device including at least one of the following: a microcontroller within housing 102 (e.g., control module 16, etc.), wireless communications circuitry within housing 102, or any combination thereof. Female connector 908 may be surrounded by a gasket that creates a seal with housing 102 at opening 904 to inhibit or prevent solvents, liquids, gases, and/or the like from entering an interior of housing 102 between female connector 908 and housing 102 at opening 104. When male connector 910 is received within female connector 908, an exterior surface of male connector 910 may form a fluid tight seal with an interior surface of female connector to inhibit or prevent solvents, liquids, gases, and/or the like from entering an interior of housing 102 via female connector 908.

Connector interface 900 may include plate 912 including first surface 913a and second surface 913b opposite first surface 913a. Second surface 913b may include plate electrical contact 914 and conductive tab 915 (e.g., a metal tab, etc.) that extends from second surface 913b of plate 912. Plate electrical contact 914 may be electrically coupled to a first further electrical contact of male connector 910, and conductive tab 915 may be electrically coupled to a second further electrical contact of male connector 910.

A lateral side 903c of housing 902 between front side 903a and rear side 903b may include pocket 994. For example, pocket 994 may be defined by a sidewall of housing 902 that extends inward from side 903c between front side 903a and rear side 903b. Opening 904 of housing 902 may be located in pocket 994 of housing 902.

Connector interface 900 may include panel 916 configured to be connected to housing 902. Panel 916 may include inner surface 917a and outer surface 917b opposite inner surface 917a. At least a portion of panel 916 may be configured to be received within pocket 994 in lateral side 903c of housing 902. Outer surface 917b of the at least a portion of panel 916 received within pocket 994 may be in-line with (e.g., in-line with, in plane with, may not extend beyond, etc.) an outer surface of lateral side 903a of housing 902 proximate pocket 994.

In some implementations, at least one fastener 918 may be configured to be received through panel 916 and fastened to housing 902. For example, the least one fastener 918 may secure or fix panel 916 to housing 902 with the at least a portion of panel 916 received within pocket 994 in lateral side 903c of housing 902.

In some implementations, pocket 994 may include at least one component 920a (e.g., a slot, a groove, etc.) that is configured to form at least one snap fit connection with at least one corresponding component 920b (e.g., a hook, a lip, etc.) of panel 916.

Inner surface 917a of panel 916 may include cavity 922. Cavity 922 may be configured to receive one or more components, such as a plate, a coin cell battery, and/or the like, and which are described in more detail herein.

When panel 916 is connected to housing 902 with plate 912 between panel 916 and housing 902, first surface 913a of plate 912 facing housing 902, coin cell battery CCB between plate 912 and panel 916, and male connector 910 received within female connector 908, panel 916 presses a first terminal of coin cell battery CCB at a first face of coin cell battery CCB into electrical contact with plate electrical contact 994 on second surface 913b of plate 912 and conductive tab 915 into electrical contact with a second terminal of coin cell battery CCB at a side of coin cell battery CCB that extends from a second face of coin cell battery CCB opposite the first face to provide a supply of electric power from coin cell battery CCB to the internal device including the at least one of the following: the microcontroller within housing 102, the wireless communications circuitry within the housing, or any combination thereof.

In some non-limiting embodiments or aspects, a first electronic module may be mounted within tool housing 12, and a second electronic module may be laterally mounted into the recess (e.g., pocket 994, etc.). At least one conductive connector (e.g., female connector 908, male connector 910 etc.) may be disposed through the first sidewall along the lateral direction in contact with the second electronic module to couple the first electronic module to the second electronic module. In an implementation, the first electronic module includes a wireless communication module and an antenna, and the second electronic module comprises a battery unit. In another implementation, the second electronic module further includes a circuit board mounted between the battery unit and the first sidewall, the circuit board is electrically connected to two electrodes of the battery unit, and the at least one conductive connector is in contact with the circuit board. In further implementation, the second electronic module further includes a circuit board mounted between the battery unit and the cover, and the circuit board facilitates an electrical connection between an electrode of the battery unit and the at least one connector. In a still further implementation, the first electronic module comprises a motor controller, and the second electronic module comprises a wireless communication module and a battery unit.

For example, the plurality of electrical contacts of female connector 908 may be electrically coupled to one or more internal power tool electrical systems, such as, electric motor 14, control module 16, power interface 18, and/or the like. In some implementations, the plurality of electrical contacts of female connector 908 may include a pair of electrical contacts electrically coupled to an internal device including at least one of the following: a microcontroller, wireless communications circuitry (e.g., a Near-field communication (NFC) enabled device, a radio-frequency identification (RFID) device, a Bluetooth^{®} device, etc.), or any combination thereof. For example, the internal device may be configured to receive a supply of electric power from a DC power source electrically coupled to male connector 910 received within female connector 908. As an example, the microcontroller (e.g., control module 16, etc.) may be configured to control a supply of electric power from a DC power source to a power consuming component electrically coupled to male connector 910 received within female connector 908. In some implementations, the microcontroller (e.g., control module 16, etc.) may be configured to communicate data with the power consuming component via one or more electrical contacts of female connector 908 and one or more corresponding further electrical contacts of male connector 910.

As another example, the microcontroller (e.g., control module 16, etc.) may be configured to control a supply of electric power from a DC power source to a power consuming component electrically coupled to electrically coupled to male connector 910 received within female connector 908. For example, control module 16 may be powered by receiving the removable battery within battery receptacle 108 (e.g., in power interface 18) and provide power through connector interface 100 to an external power consuming device (e.g., a wireless communications circuit, a location tracking device, etc.) that is electrically coupled to female connector 908 that is electrically coupled to male connector 910. In this way, non-limiting embodiments or aspects of a connector interface may create an electrical connection to either power an internal device within a power tool housing via an external power source, or power an external device mounted to the power tool housing via an internal power source.

In some implementations, the microcontroller (e.g., control module 16, etc.) may be configured to communicate data with the power consuming component via an electrical contact of a pair of electrical contacts of female connector 908 and a further electrical contact of a pair of further electrical contacts of male connector 910 used to either power an internal device within a power tool housing via an external power source, or power an external device mounted to the power tool housing via an internal power source. In some implementations, the plurality of electrical contacts of female connector 908 and the plurality of further electrical contacts of male connector 910 may each further include at least one additional electrical contact (e.g., a third electrical contact in addition to the pair of electrical contacts, etc.) respectively electrically coupled to the microcontroller and the power consuming component, and the microcontroller may be configured to communicate data with the power consuming component via the at least one additional electrical contacts.

Although embodiments have been described in detail for the purpose of illustration, it is to be understood that such detail is solely for that purpose and that the disclosure is not limited to the disclosed embodiments or aspects, but, on the contrary, is intended to cover modifications and equivalent arrangements that are within the spirit and scope of the appended claims. For example, it is to be understood that the present disclosure contemplates that, to the extent possible, one or more features of any embodiment or aspect can be combined with one or more features of any other embodiment or aspect.

## Claims

1. A connector interface, comprising:
a housing including at least one opening;
a circuit board within the housing, wherein the circuit board includes a plurality of electrical contacts;
a plurality of flexible conductive members on the circuit board over the plurality of electrical contacts,
wherein the plurality of flexible conductive members extends through the at least one opening of the housing, and
wherein the plurality of flexible conductive members is configured to come into electrical contact with the plurality of electrical contacts when pressed toward the plurality of electrical contacts.

2. The connector interface of claim 1, wherein the plurality of electrical contacts includes a pair of electrical contacts electrically coupled to an internal device comprising at least one of the following: a microcontroller, wireless communications circuitry, or any combination thereof.

3. The connector interface of claim 2, wherein the internal device is configured to receive a supply of electric power from a DC power source electrically coupled to a corresponding pair of flexible conductive members of the plurality of flexible conductive members pressed into electrical contact with the pair of electrical contacts.

4. The connector interface of claim 2 or 3, further comprising:
the microcontroller, wherein the microcontroller is configured to control a supply of electric power from a DC power source to a power consuming component electrically coupled to a corresponding pair of flexible conductive members of the plurality of flexible conductive members pressed into electrical contact with the pair of electrical contacts.

5. The connector interface of claim 4, wherein the microcontroller is further configured to communicate data with the power consuming component via an electrical contact of the pair of electrical contacts and a corresponding flexible conductive member of the pair of corresponding flexible conductive members pressed into electrical contact with the electrical contact.

6. The connector interface of claim 4 or 5, wherein the plurality of electrical contacts further includes at least one further electrical contact electrically coupled to the microcontroller, and wherein the microcontroller is configured to communicate data with the power consuming component via the at least one further electrical contact and a corresponding at least one further flexible conductive member of the plurality of flexible conductive members electrically coupled to the power consuming component and pressed into electrical contact with the at least one further electrical contact.

7. The connector interface of any preceding claim, wherein the housing includes a front side and a rear side opposite the front side, wherein the housing is configured to mate with a removable battery pack by receiving the removable battery pack within a recess in one of the front side and the rear side of the housing, wherein a side of the housing between the front side and the rear side includes a pocket, and wherein the at least one opening of the housing is located in the pocket of the housing and the plurality of flexible conductive members extends through the at least one opening of the housing and into the pocket.

8. The connector interface of claim 7, further comprising:
a panel configured to be connected to the housing, wherein the panel includes an inner surface and an outer surface opposite the inner surface, wherein at least a portion of the panel is configured to be received within the pocket in the side of the housing, and wherein the outer surface of the at least a portion of the panel received within the pocket is in-line with an outer surface of the side of the housing proximate the pocket.

9. The connector interface of any preceding claim, wherein the plurality of flexible conductive members that extends through the at least one opening of the housing fluidically seals the at least one opening of the housing.

10. The connector interface of any preceding claim, wherein each flexible conductive member of the plurality of flexible conductive members includes a dome portion extending over a corresponding electrical contact of the plurality of electrical contacts and a base portion that extends from the dome portion and is in physical contact with an area of the circuit board surrounding the corresponding electrical contact.

11. The connector interface of claim 10, wherein the dome portion of each flexible conductive member includes a post portion that extends in a first direction through a corresponding opening of the at least one opening in the housing and a tab portion that extends in a second direction opposite the first direction toward the corresponding electrical contact of the plurality of electrical contacts.

12. The connector interface of any preceding claim, further comprising:
a frame configured to carry the circuit board and the plurality of flexible conductive members, wherein the frame includes one or more openings configured to receive one or more fasteners to be fastened to the housing with the plurality of flexible conductive members extending through the at least one opening of the housing.

13. The connector interface of any preceding claim, wherein the plurality of flexible conductive members includes a first flexible conductive member and a second flexible conductive member, wherein the first flexible conductive member extends from a first opening of the at least one opening of the housing a first distance, and wherein the second flexible conductive member extends from a second opening of the at least one opening of the housing a second distance that is less than the first distance.

14. A power tool comprising a connector interface according to any one of the preceding claims.

15. An electric power tool, comprising:
a housing that includes a front side and a rear side, wherein the housing is configured to mate with a removable battery pack by receiving the removable battery pack within a recess in one of the front side and the rear side of the housing, wherein a side of the housing between the front side and the rear side includes a pocket, and wherein the pocket includes at least one opening;
a circuit board within the housing, wherein the circuit board includes a plurality of electrical contacts;
a plurality of flexible conductive members on the circuit board over the plurality of electrical contacts,
wherein the plurality of flexible conductive members extends through the at least one opening, and
wherein the plurality of flexible conductive members is configured to come into electrical contact with the plurality of electrical contacts when pressed toward the plurality of electrical contacts.
